# FASCICULE DE BREVET EUROPEEN

(11) **EP 1 083 115 B1**
(45) Date de publication et mention de la délivrance du brevet: **28.05.2003**
(21) Numéro de dépôt: 00402364.4
(22) Date de dépôt: 25.08.2000
(51) Int. Cl.: B62D 25/10

(54) **Capot automobile renforcé et léger**
Leichte und verstärkte Kraftfahrzeughaube
Light and reinforced bonnet for a vehicle

(30) Priorité: 09.09.1999 FR 9911260
(43) Date de publication de la demande: 14.03.2001
(73) Titulaire: USINOR, 92800 Puteaux (FR)
(72) Inventeur: Devin, Jean-Marc, 75009 Paris (FR); Schmit, Francis, 60250 Ansacq (FR); Brun, Olivier, 93120 La Courneuve (FR); Deprez, Pascal, 57000 Metz (FR)
(74) Mandataire: Neyret, Daniel

(56) Documents cités:
- EP-A- 0 598 428
- FR-A- 2 621 677
- FR-A- 2 726 802
- US-A- 2 709 108

## Description

L'invention concerne les capots qui assurent la couverture d'un compartiment à l'avant ou à l'arrière d'un véhicule automobile ; ces capots assurent généralement la couverture du compartiment « moteur ».Un capot selon le préambule de la revendication 1 est connu de l'état de la technique.

Les capots de véhicule automobile comprennent généralement une peau externe et des moyens internes de renforcement de cette peau (US -A-2 709108).

Comme moyen de renforcement, on utilise couramment :
- une doublure partielle, comme décrit dans le brevet GB 2 268 130 (FORD),
- un assemblage d'organes structuraux, comme décrit dans le brevet US 5 605 371 (INLAND STEEL),
- un profilé creux sur le pourtour de la peau, comme décrit dans le brevet DE 44 19 218 (OPEL).

En outre, les capots de véhicule automobile comprennent d'une manière classique des accessoires comme des charnières, des butées et des moyens de fermeture.

Une des fonctions principales des moyens de renforcement est de rigidifier le capot notamment en torsion et en flexion ; pour un capot de forme générale rectangulaire présentant quatre coins, les critères retenus peuvent alors être typiquement les suivants :
- en torsion : le capot étant maintenu horizontalement sur trois coins, on exerce une torsion « standard » en appliquant une force verticale d'une valeur de 100 N sur le coin non maintenu ; pour respecter le critère de torsion, il convient que le déplacement du coin non maintenu résultant de cette torsion « standard» reste inférieur ou égal à environ 20 millimètres. La rigidité s'exprime comme le rapport de l'effort exercé au déplacement résultant. La rigidité en torsion doit donc être supérieure ou égale à 5 N/mm.
- en flexion : le capot étant maintenu horizontalement d'une manière stable sur ses quatre coins, on exerce une flexion « standard » en appliquant une force verticale d'une valeur de 110 N entre deux coins quelconques du capot ; pour respecter le critère de flexion, il convient que la déformation résultant de cette flexion « standard » ne dépasse pas 2 mm ce qui correspond à une rigidité en flexion supérieure à 55 N/mm.

Pour des raisons économiques et de résistance mécanique, les peaux et renforcements de capots sont généralement réalisés en tôles d'acier.

Dans un but d'allégement, on connaît des capots en tôle stratifiée comprenant deux parements en acier de faible épaisseur et une âme épaisse à base de matériau polymère ; le brevet FR 2 726 802 (SOLLAC) décrit ainsi un capot à structure « sandwich » : parement supérieur lisse, parement inférieur nervuré, colle époxy entre les parements et dans les nervures ; à cause des nervures du parement, l'épaisseur de l'âme n'est pas homogène ; grâce aux nervures de la tôle, il n'est pas nécessaire de prévoir d'autres moyens de renforcement du capot.

Pour obtenir des capots légers, il est connu d'utiliser des tôles d'aluminium, ce qui est relativement cher.

L'invention a pour but de fournir un capot à la fois léger, résistant et économique.

A cet effet, l'invention a pour objet un capot de véhicule automobile comprenant une peau externe et des moyens internes de renforcement solidaires de ladite peau, présentant une résistance à la torsion supérieure ou égale à 5 N/mm et une résistance à la flexion supérieure à 55 N/mm, caractérisé en ce que :
- ladite peau est en tôle composite stratifiée comprenant deux parements externes en tôle d'acier et une âme d'épaisseur uniforme en matériau polymère,
- le poids des moyens internes de renforcement est inférieur à 40%, de préférence inférieur à 20%, du poids total de ladite peau et desdits moyens de renforcement.

L'invention peut également présenter une ou plusieurs des caractéristiques suivantes :
- l'épaisseur de l'âme est supérieure ou égale à 0,8 mm.
- l'épaisseur des parements est inférieure ou égale à 0,25 mm.
- lesdits moyens de renforcement consistent essentiellement en une armature en forme de V s'étendant d'un bord à l'autre opposé de la peau ; de préférence, le capot comporte alors des charnières fixées aux extrémités du V et des moyens de fermeture fixés à la base du V de ladite armature.
- lesdits moyens de renforcement consistent essentiellement en deux renforts transversaux indépendant appliqués le long des deux bords opposés de la peau correspondant à la plus grande dimension du capot.
- lesdits renforts et ladite peau sont solidarisés par sertissage et par collage ; de préférence, les extrémités des renforts transversaux présentent des bords tombés solidarisés par des rivets avec les bords tombés correspondants de la peau.
- lesdits moyens de renforcement consistent essentiellement en un cadre périphérique appliqué le long des quatre bords de la peau ; de préférence, le cadre et la peau sont alors solidarisés, au moins partiellement, par sertissage, mais sans collage sur les bords intérieurs du cadre.

L'invention sera mieux comprise à la lecture de la description qui va suivre, donnée à titre d'exemple non limitatif, et en référence aux figures annexées sur lesquelles :
- la figure 1 illustre un premier mode de réalisation de l'invention avec armature en V, vu en perspective éclatée.
- la figure 2 illustre un deuxième mode de réalisation de l'invention avec deux armatures longitudinales indépendantes, vu de dessous.
- la figure 3 illustre un troisième mode de réalisation de l'invention avec une armature classique en forme de cadre, vu en perspective éclatée.

On va maintenant décrire le capot selon l'invention, et notamment sa peau externe et sa mise en forme, ses moyens internes de renforcement, et l'assemblage de cette peau et de ces moyens de renforcement.

Selon l'invention, on utilise, pour la peau, une tôle composite stratifiée comprenant deux parements externes en tôle d'acier et une âme d'épaisseur uniforme en matériau polymère.

Comme matériau polymère, on peut utiliser par exemple des matériaux à base de polypropylène ou à base de polyester comme du PET (polyéthylène téréphtalate).

La combinaison de parements à haute résistance en traction (acier) et d'une âme suffisamment résistante à la compression confère à la tôle composite stratifiée la résistance mécanique requise.

Pour que l'âme soit suffisamment résistante à la compression, il importe que la porosité du matériau polymère soit assez faible, notamment inférieure à 25% en volume ; à l'inverse, comme indiqué dans le document FR 2 760 983 (SOLLAC), un minimum de porosité peut être nécessaire pour faciliter les opérations de mise en forme (par exemple : emboutissage, pliage, tombage de bords) et d'assemblage (par exemple, sertissage) de la tôle composite stratifiée qui sont nécessaires pour fabriquer un capot.

Les documents suivants décrivent des tôles composites stratifiées de ce type : EP 019 835 (DOW), EP 115 103 (SUMITOMO), EP 478 039 (HOOGOVENS).

Cette tôle composite stratifiée présente un très bon ratio (rigidité de flexion)/(poids), notamment lorsque l'épaisseur de l'âme est élevée et quand celle des parements en acier est faible ; le tableau I illustre cet avantage.

**Tableau I -**

| Résistance à la flexion du matériau stratifié | | | | |
|---|---|---|---|---|
| Épaisseur Acier | Épaisseur Âme | Masse (kg/m²) | Rigidité Flexion MPa mm³(1) | Ratio : Rigidité/masse |
| 0,25 mm (2) | 0,2 mm | 4,1 | 5860 | 1440 |
| 0,25 mm (2) | 0,8 mm | 4.6 | 29500 | 6400 |
| 0,25 mm (2) | 1,5 mm | 5,2 | 81300 | 15500 |
| 0,7 mm (3) | 0 | 5,5 | 6003 | 1090 |

| | | | | |
|---|---|---|---|---|
| (1) calculée pour une flexion selon une ligne parallèle à deux côtés d'une plaque rectangulaire de matériau, par unité de longueur de cette ligne. | | | | |
| (2) épaisseur d'un seul parement d'acier | | | | |
| (3) plaque plane d'acier. | | | | |

Selon ce tableau I, on constate que le stratifié ayant une âme épaisse (1,5 mm) pèse quasiment le même poids que la plaque d'acier (0,7 mm) mais résiste environ 12 fois mieux en flexion.

Les stratifiés dont l'âme présente une épaisseur supérieure ou égale à 0,8 mm sont donc particulièrement indiqués pour mettre en oeuvre l'invention.

Ainsi, de préférence,
- l'épaisseur de l'âme est supérieure ou égale à 0,8 mm,
- l'épaisseur des parements est inférieure ou égale à 0,25 mm.

On met en forme la peau du capot par des moyens conventionnels, notamment par emboutissage ; les documents suivants décrivent la mise en forme de matériaux stratifiés : EP 479 369 (HOOGOVENS) et EP 598 428 (HOOGOVENS).

Il se peut que l'épaisseur de l'âme de la tôle composite stratifiée varie localement dans les zones de déformation résultant des opérations de mise en forme ou d'assemblage, comme décrit dans le document FR 2 760 983 ; malgré ces variations locales d'épaisseur, on considère que la peau du capot selon l'invention comporte une âme d'épaisseur uniforme.

La peau peut présenter des bords tombés qui participent à la rigidité en flexion et en torsion du capot, notamment lorsque la hauteur de ces bords tombés est supérieure à 15 mm ; pour des raisons de style et d'aspect, d'une manière classique, les bords avant et arrière de la peau sont généralement sertis.

La peau peut également être sertie sur tout le pourtour.

On prépare ensuite des moyens internes de renforcement du capot à partir de tôles d'acier, en utilisant des moyens classiques de l'art antérieur du moment que, selon l'invention, le poids de ces moyens internes reste inférieur à 40% du poids total de la peau et de ces moyens.

L'épaisseur de la tôle d'acier qu'on utilise pour constituer ces moyens de renforcement est généralement comprise entre 0,5 et 0,9 mm ; en pratique, 0.5 mm est une limite inférieure raisonnable, au regard des critères d'emboutissabilité, de résistance mécanique, d'assemblage par points de soudure avec d'éventuels renforts de fixation, généralement en tôle plus épaisse ; la nuance d'acier utilisée pour ces moyens de renforcement est une nuance emboutissable classique, ne présentant pas de limite d'élasticité particulièrement élevée, car le capot n'est pas une pièce de structure.

Ces moyens de renforcement sont généralement réalisés par emboutissage.

En utilisant ce type de tôles et ce type d'acier pour les moyens de renforcement, il convient de choisir une forme optimale qui respecte la limite pondérale caractéristique de l'invention et qui permette néanmoins d'obtenir un capot présentant les résistances en flexion et en torsion requises.

A cet effet, on utilise les moyens de modélisation classiques ; les exemples 1 à 3 présentent des formes très différentes pour ces moyens de renforcement ; l'exemple 3 illustre une forme très classique de type « cadre » alors que les exemples 1 et 2 illustrent des formes nouvelles.

On assemble ensuite les moyens de renforcement et la peau par des moyens conventionnels, comme le collage et le sertissage, ou encore le rivetage.

Les exemples suivants illustrent l'invention.

### Exemple 1 :

Cet exemple a pour but d'illustrer un premier mode de réalisation de l'invention dans le cas d'un capot dont les dimensions sont inscrites dans un rectangle 1375 mm x 1360 mm (surface 1,5 m².)

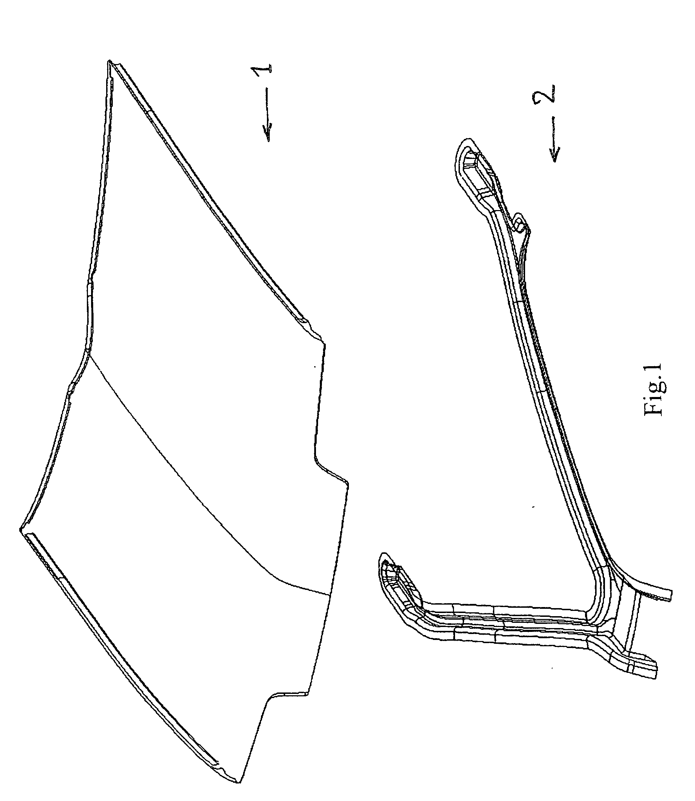

En référence à la figures 1, le capot comprend une peau 1 en tôle composite stratifiée et une armature 2 en forme de V comme moyen de renforcement ; ce capot ne comporte aucune autre armature, même le long des contours de la peau.

L'armature 2 en forme de V s'étend d'un bord à l'autre opposé de la peau à renforcer, au sens que l'avant de la peau correspond à la base du V et que chaque extrémité du bord arrière de la peau correspond à une extrémité du V.

Cette forme en V de l'armature 2 est particulièrement avantageuse pour la fixation des charnières et des moyens de fermeture du capot : en effet, on fixe une charnière à chaque extrémité du V le long du même bord de peau et on fixe les moyens de fermeture à la base du V au niveau du centre du bord de peau opposé

L'armature 2 est réalisée en tôle d'acier - épaisseur 0,8 mm - emboutie de sorte que sa forme générale vue en coupe est un « U» avec une hauteur maximale de 25 mm environ et une largeur moyenne de 30 mm.

La tôle composite stratifiée utilisée pour la peau 1 comporte deux parements en tôle d'acier - chacun d'épaisseur 0,25 mm - et une âme d'épaisseur uniforme 1,5 mm à base de polypropylène.

Les bords de la peau sont tombés ou sertis ; en cas de bords tombés, la hauteur des bords est supérieure à 15 mm, de l'ordre de 23 mm.

Hors accessoires comme les charnières, moyens de fermeture, la masse totale de ce capot est 9,6 kg répartis entre 7,9 kg pour la peau et seulement 1,8 kg pour les moyens de renforcement de la peau ; le poids des moyens de renforcement représente moins de 20 % du poids du capot hors accessoires ; par rapport à un capot classique de performances mécaniques comparables (peau en tôle d'acier - armature en forme de doublure), le gain de poids est supérieur à 35% ; comme les parements de la peau et l'armature sont en acier, le capot reste économique.

Les performances mécaniques obtenues sont alors les suivantes :
- en torsion : le capot étant maintenu horizontalement sur trois coins, on exerce une torsion « standard » en appliquant une force verticale d'une valeur de 100 N sur le coin non maintenu ; on observe alors un déplacement de ce coin de 20 mm environ ; la rigidité en torsion est donc de l'ordre de 5 N/mm.
- en flexion : le capot maintenu horizontalement d'une manière stable sur ses quatre coins, on exerce une flexion « standard » en appliquant une force verticale d'une valeur de 110 N entre deux coins quelconques du capot ; quelle que soit la configuration de flexion, le déplacement observé reste inférieur à 2 mm ; la rigidité en flexion est donc supérieure à 55 N/mm.

### Exemple 2 :

Cet exemple a pour but d'illustrer un deuxième mode de réalisation de l'invention pour un capot dont les dimensions sont 670 mm x 1520 mm.

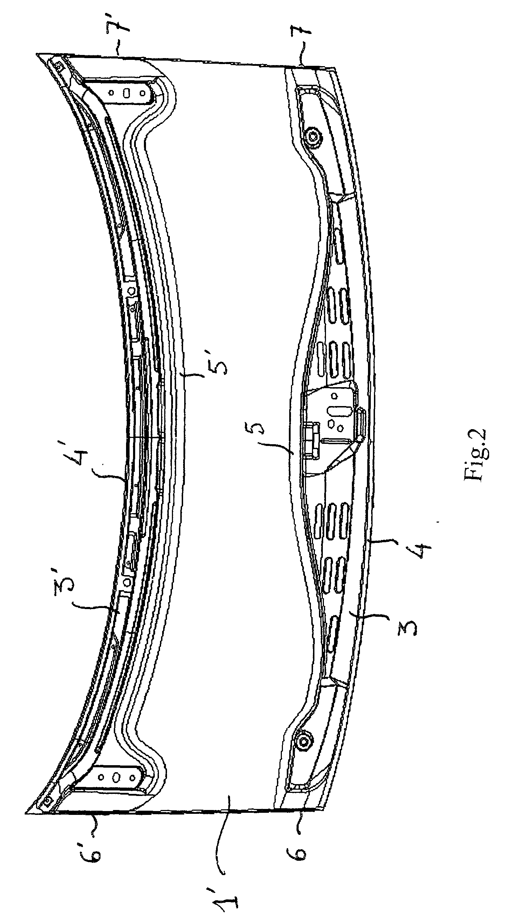

En référence à la figure 2, le capot comprend une peau 1' en tôle composite stratifiée et deux renforts transversaux 3, 3' appliqués le long de deux bords opposés de la peau correspondant à la plus grande dimension du capot ; ce capot ne comporte aucune autre armature.

Les renforts transversaux 3, 3' sont réalisés en tôle d'acier - épaisseur 0,6 mm - emboutie sur une profondeur de 20 mm au maximum.

La tôle composite stratifiée utilisée pour la peau 1 comporte deux parements en tôle d'acier - chacun d'épaisseur 0,25 mm - et une âme d'épaisseur uniforme 1 mm à base de polypropylène.

Les bords de la peau sont tombés ou sertis ; en cas de bords tombés, la hauteur des bords est supérieure à 15 mm, de l'ordre de 18 mm.

Les armatures et la peau sont assemblées comme suit :
- sertissage des bords extérieurs 4, 4' des renforts 3, 3' sur les bords avant et arrière de la peau 1', avec incorporation de colle et de mastic d'étanchéité,
- les bords intérieurs 5, 5' des renforts présentant une feuillure, encollage de cette feuillure pour l'assembler à la peau 1'.
- à chaque extrémité 6, 7 ; 6', 7' des renforts 3, 3', application de rivets entre le bord tombé de ces extrémités et celui de la peau 1'.

La combinaison de ces moyens d'assemblage améliore avantageusement les propriétés mécaniques du capot.

On fixe sur le renfort transversal avant 3 les moyens de fermeture du capot ainsi que les butées éventuelles.

On fixe sur le renfort transversal arrière 3' les renforts de charnières du capot.

Hors accessoires de type renforts de charnières, moyens de fermeture et butées, la masse totale de ce capot est 7,96 kg répartis entre 4,87 kg pour la peau et seulement 3,09 kg pour les moyens de renforcement de la peau ; le poids des moyens de renforcement représente moins de 40 % du poids du capot hors accessoires ; par rapport à un capot classique de performances mécaniques comparables (peau en tôle d'acier - armature en forme de doublure), le gain de poids est de 30% ; comme les parements de la peau et l'armature sont en acier, le capot reste économique.

Les performances mécaniques obtenues sont alors les suivantes :
- en torsion : le capot étant maintenu horizontalement sur trois coins, on exerce une torsion « standard » en appliquant une force verticale d'une valeur de 100 N sur le coin non maintenu ; le coin non maintenu se déplace alors de 14 millimètres ; la rigidité en torsion est donc supérieure à 5 N/mm.
- en flexion : le capot maintenu horizontalement d'une manière stable sur ses quatre coins, on exerce une flexion « standard » en appliquant une force verticale d'une valeur de 110 N entre deux coins quelconques du capot ; quelle que soit la configuration de flexion, le déplacement observé reste inférieur à 2 mm, et la rigidité en flexion est supérieure à 55 N/mm.

### Exemple 3 :

Cet exemple a pour but d'illustrer un troisième mode de réalisation plus classique de l'invention dans le cas d'un capot dont les dimensions sont 670 mm x 1520 mm.

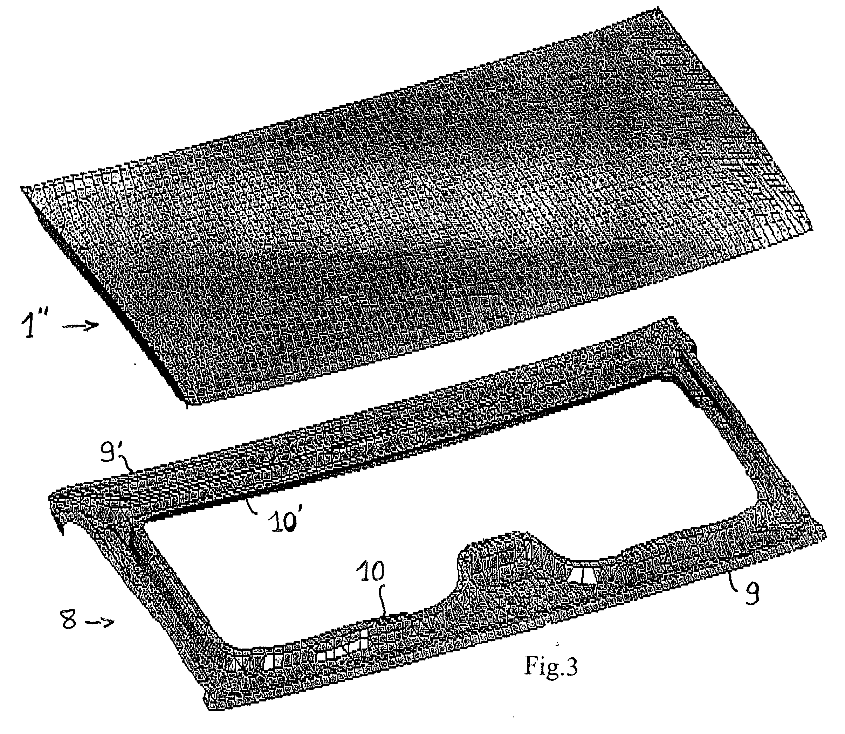

En référence à la figure 3, le capot comprend une peau 1" en tôle composite stratifiée et un renfort en forme de cadre 8 appliqué sur le pourtour de la peau; ce capot ne comporte aucune autre armature.

Ce cadre est réalisé en tôle d'acier d'épaisseur 0,6 mm emboutie sur une profondeur de 25 mm au maximum.

La tôle composite stratifiée utilisée pour la peau 1" comporte deux parements en tôle d'acier - chacun d'épaisseur 0,25 mm - et une âme d'épaisseur uniforme 1 mm à base de polyester.

Les bords de la peau sont sertis sauf les bords latéraux qui sont tombés, la hauteur des bords tombés est supérieure à 15 mm, de l'ordre de 18 mm.

Le cadre d'armature et la peau sont assemblées comme suit :
- sertissage des bords extérieurs 9, 9' du renfort 8 sur les bords avant et arrière de la peau 1", avec incorporation de colle et de mastic d'étanchéité,
- les bords intérieurs 10, 10' du renfort 8 présentant une feuillure, ne sont pas collés à la peau 1", ce qui supprime avantageusement les risques de marques sur la peau 1" du capot; pour éviter les bruits parasites qui résulteraient de vibrations entre ces deux composants du capot, il est alors préférable d'intercaler une feuille en matériau souple entre le renfort et la peau ; cette feuille d'amortissement des vibrations peut être collées sur le renfort.
- à chaque extrémité du renfort 8, application de rivets entre le bord tombé de ces extrémités et celui de la peau 1".

La combinaison de ces moyens d'assemblage améliore avantageusement les propriétés mécaniques du capot.

On fixe sur le renfort 8 les moyens de fermeture du capot ainsi que les butées éventuelles et les renforts de charnières du capot.

Hors accessoires, la masse totale de ce capot est 8.1 kg répartis entre 4.87 kg pour la peau et seulement 3.23 kg pour les moyens de renforcement de la peau ; le poids des moyens de renforcement représente moins de 40 % du poids du capot hors accessoires ; par rapport à un capot classique de performances mécaniques comparables (peau en tôle d'acier - armature en forme de doublure), le gain de poids est de 28% ; comme les parements de la peau et l'armature sont en acier, le capot reste économique.

Les performances mécaniques obtenues sont alors les suivantes :
- en torsion : le capot étant maintenu horizontalement sur trois coins, on exerce une torsion " standard " en appliquant une force verticale d'une valeur de 100 N sur le coin non maintenu ; le coin non maintenu se déplace alors de 8 millimètres ; la rigidité en torsion est donc supérieure à 5 N/mm.
- en flexion : le capot maintenu horizontalement d'une manière stable sur ses quatre coins, on exerce une flexion " standard " en appliquant une force verticale d'une valeur de 110 N entre deux coins quelconques du capot ; quelle que soit la configuration de flexion, le déplacement observé reste inférieur à 2 mm, et la rigidité en flexion est supérieure à 55 N/mm.

## Revendications

1. Capot de véhicule automobile comprenant une peau externe (1; 1'; 1") et des moyens internes de renforcement (2 ; 3, 3'; 8) solidaires de ladite peau, présentant une résistance à la torsion supérieure ou égale à 5 N/mm et une résistance à la flexion supérieure à 55 N/mm, **caractérisé en ce que** :
- ladite peau (1; 1'; 1") est en tôle composite stratifiée comprenant deux parements externes en tôle d'acier et une âme d'épaisseur uniforme en matériau polymère,
- le poids des moyens internes de renforcement est inférieur à 40% du poids total de ladite peau et desdits moyens de renforcement.

2. Capot selon la revendication 1 **caractérisé en ce que** ladite épaisseur de l'âme est supérieure ou égale à 0,8 mm.

3. Capot selon l'une quelconque des revendications 1 à 2 **caractérisé en ce que** l'épaisseur desdits parements est inférieure ou égale à 0,25 mm.

4. Capot selon l'une quelconque des revendications 1 à 3 **caractérisé en ce que** le poids des moyens internes de renforcement (2 ; 3, 3'; 8) est inférieur à 20% du poids total de ladite peau (1;1';1'')et desdits moyens de renforcement.

5. Capot selon l'une quelconque des revendications 1 à 4 **caractérisé en ce que** lesdits moyens de renforcement consistent essentiellement en une armature (2) en forme de V s'étendant d'un bord à l'autre opposé de la peau (1).

6. Capot selon la revendication 5 **caractérisé en ce qu'**il comporte des charnières fixées aux extrémités du V et des moyens de fermeture fixés à la base du V de ladite armature (2).

7. Capot selon l'une quelconque des revendications 1 à 4 **caractérisé en ce que** lesdits moyens de renforcement consistent essentiellement en deux renforts transversaux indépendant (3, 3') appliqués le long des deux bords opposés de la peau (1') correspondant à la plus grande dimension du capot.

8. Capot selon la revendication 7 **caractérisé en ce que** lesdits renforts (3, 3') et ladite peau (1') sont solidarisés par sertissage et par collage.

9. Capot selon l'une quelconque des revendications 7 à 8 **caractérisé en ce que** les extrémités (6, 7, 6', 7') des renforts transversaux (3, 3') présentent des bords tombés et **en ce que** ces bords tombés sont solidarisés par des rivets avec les bords tombés correspondants de ladite peau (1').

10. Capot selon l'une quelconque des revendications 1 à 4 **caractérisé en ce que** lesdits moyens de renforcement consistent essentiellement en un cadre périphérique (8) appliqué le long des quatre bords de ladite peau (1"').

11. Capot selon la revendication 10 **caractérisé en ce que** ledit cadre (8) et ladite peau (1"') sont solidarisés par sertissage, sans collage sur les bords intérieurs (10, 10') dudit cadre (8).

## Patentansprüche

1. Kraftfahrzeughaube, die eine Außenhaut ( 1; 1'; 1") und innere Verstärkungsmittel (2; 3, 3'; 8), die mit der Haut fest verbunden sind, umfaßt und einen Widerstand gegenüber einer Torsion von wenigstens 5 N/mm und einen Widerstand gegenüber einer Durchbiegung von mehr als 55. N/mm aufweist, **dadurch gekennzeichnet, daß**:
- die Haut (1; 1'; 1") aus einem laminierten Verbundblech besteht, das zwei äußere Verkleidungen aus Stahlblech und einen Kern mit gleichmäßiger Dicke aus einem Polymerwerkstoff umfaßt,
- wobei das Gewicht der inneren Verstärkungsmittel (2; 3, 3'; 8) weniger als 40 % des Gesamtgewichts der Haut und der Verstärkungsmittel beträgt.

2. Haube nach Anspruch 1, **dadurch gekennzeichnet, daß** die Dicke des Kerns größer oder gleich 0,8 mm ist.

3. Haube nach einem der Ansprüche 1 bis 2, **dadurch gekennzeichnet, daß** die Dicke der Verkleidungen kleiner oder gleich 0,25 mm ist.

4. Haube nach einem der Ansprüche, 1 bis 3, **dadurch gekennzeichnet, daß** das Gewicht der inneren Verstärkungsmittel (2; 3, 3'; 8) weniger als 20 % des Gesamtgewichts der Haut (1; 1'; 1") und der Verstärkungsmittel beträgt.

5. Haube nach einem der Ansprüche 1 bis 4, **dadurch gekennzeichnet, daß** die Verstärkungsnittel im wesentlichen aus einer V-förmigen Bewehrung (2) bestehen, die sich von einer Kante zu der gegenüberliegenden anderen Kante der Haut (1) erstreckt.

6. Haube nach Anspruch 5, **dadurch gekennzeichnet, daß** sie an den Enden des V befestigte Scharniere und an der Basis des V der Bewehrung (2) befestigte Verschlußmittel umfaßt.

7. Haube nach einem der Ansprüche 1 bis 4, **dadurch gekennzeichnet, daß** die Verstärkungsmittel im wesentlichen aus zwei unabhängigen transversalen Verstärkungen (3, 3') bestehen, die längs der zwei gegenüberliegenden Ränder der Haut (1'), die der größten Abmessung der Haube entsprechen, angebracht sind.

8. Haube nach Anspruch 7, **dadurch gekennzeichnet, daß** die Verstärkungen (3, 3') und die Haut (1') mittels Bördelverbindung und Kleben aneinander befestigt sind

9. Haube nach einem der Ansprüche 7 bis 8, **dadurch gekennzeichnet, daß** die Enden (6, 7, 6', 7') der transversalen Verstärkungen (3, 3') eingeschlagene Ränder aufweisen und daß diese eingeschlagenen Ränder durch Nieten mit den entsprechenden, eingeschlagenen Rändern der Haut (1') fest verbunden sind.

10. Haube nach einem der Ansprüche 1 bis 4, **dadurch gekennzeichnet, daß** die Verstärkungsmittel im wesentlichen aus einem Umfangsrahmen (8) bestehen, der längs der vier Ränder der Haut (1"') angebracht ist.

11. Haube nach Anspruch 10, **dadurch gekennzeichnet, daß** der Rahmen (8) und die Haut (1"') mittels Bördelverbindung ohne Klebung an den inneren Rändern (10, 10') des Rahmens (8) befestigt sind.

## Claims

1. Motor vehicle bonnet comprising an outer skin (1; 1', 1'') and internal means of reinforcement (2; 3, 3'; 8) secured to the said skin, having a torsional strength greater than or equal to 5 N/mm and a flexural strength greater than 55 N/mm, **characterized in that**:
- the said skin (1, 1', 1") is made of a laminated composite sheet comprising two outer facing plies made of steel sheet and a core with a uniform thickness made of a polymeric material,
- the weight of the internal means of reinforcement (2; 3, 3'; 8) is less than 40 % of the total weight of the said skin and of the said means of reinforcement.

2. Bonnet according to claim 1 **characterized in that** the said thickness of the core is greater than or equal to 0.8 mm.

3. Bonnet according to either of claims 1 or 2 **characterized in that** the thickness of the said facing plies is less than or equal to 0.25. mm.

4. Bonnet according to any one of claims 1 to 3 **characterized in that** the weight of the internal means of reinforcement (2; 3, 3'; 8) is less than 20 % of the total weight of the said skin (1, 1', 1") and the said means of reinforcement.

5. Bonnet according to any one of claims 1 to 4 **characterized in that** the means of reinforcement consists substantially of a V-shaped framework (2) extending from one edge to the other opposite edge of the skin (1).

6. Bonner according 10 claim 5 **characterized in that** it carries hinges fixed to the ends of the V and closing means fixed to the base of the V of the said framework. (2).

7. Bonnet according to any one of claims 1 to 4 **characterized in that** the said means of reinforcement consist substantially of two independent transverse stiffeners (3, 3') applied along the two opposite edges of the skin (1') corresponding to the larger dimension of the bonnet.

8. Bonnet according to claim 7 **characterized in that** the said stiffeners (3, 3') and the said skin (1') are secured by crimping and by gluing.

9. Bonnet according to either of claims 7 or 8 **characterized in that** the ends (6, 7, 6', 7') of the transverse stiffeners (3, 3') have turned-over edges and **in that** the turned-over edges are secured by rivers to the corresponding turned-over edges of the said skin (1').

10. Bonnet according to any one of claims 1 to 4 **characterized in that** the said means of reinforcement consist substantially of a peripheral frame (8) applied along the four edges of the said skin (1''').

11. Bonnet according to claim 10 **characterized in that** the said frame (8) and the said skin (1''') are secured by crimping, without gluing, to the inner edges (10, 10') of the said frame (8).
